# EUROPÄISCHE PATENTSCHRIFT

(11) **EP 0 988 192 B1**
(45) Veröffentlichungstag und Bekanntmachung des Hinweises auf die Patenterteilung: **03.05.2006**
(21) Anmeldenummer: 99907235.8
(22) Anmeldetag: 12.01.1999
(51) Int. Cl.: B60S 1/08

(54) **SENSOREINRICHTUNG ZUR ERFASSUNG EINER BENETZUNG AUF EINER SCHEIBE**
SENSOR DEVICE FOR DETECTING MOISTURE ON A WINDOW
DISPOSITIF DETECTEUR POUR DETECTER LA PRESENCE D'HUMIDITE SUR UNE VITRE

(30) Priorität: 08.04.1998 DE 19815746
(43) Veröffentlichungstag der Anmeldung: 29.03.2000
(73) Patentinhaber: ROBERT BOSCH GMBH, 70442 Stuttgart (DE)
(72) Erfinder: PIENTKA, Rainer, D-77871 Renchen (DE)
(86) Internationale Anmeldenummer: PCT/DE1999/000032
(87) Internationale Veröffentlichungsnummer: WO 1999/052752

(56) Entgegenhaltungen:
- EP-A- 0 444 520
- DE-A- 4 403 221
- DE-A- 19 526 249
- US-A- 4 355 271
- US-A- 5 059 877

## Beschreibung

### Stand der Technik

Die Erfindung geht aus von einer Sensoreinrichtung zur Erfassung einer Benetzung einer Scheibe nach dem Oberbegriff des Hauptanspruchs.

Aus der DE 197 01 258 A1 ist eine Sensoreinrichtung zur Steuerung von Wisch-Wasch-Anlagen für Kraftfahrzeugscheiben bekannt geworden, die nach einem optoelektronischen Prinzip funktioniert. Die Sensoreinrichtung weist mehrere Sender und mindestens einen Empfänger auf, die über ein Koppelmittel eine definierte Strahlung in die Scheibe ein- und auskoppeln, deren Benetzung durch Feuchtigkeit oder Verschmutzung gemessen werden soll. Die Strahlung wird aufgrund des Einkopplungswinkels mindestens einmal in der Scheibe an der (trockenen) Scheibenoberfläche totalreflektiert und schließlich an einer vorbestimmten Stelle wieder auf einen Empfänger ausgekoppelt. Durch eine Benetzung der Scheibenoberfläche (Luft, Wasser, Eis, Schmutz, Nebel etc.) wird die Totalreflexion gestört, so daß benetzungsabhängige Strahlungsverluste durch Auskoppelung eines Teils der Strahlung aus dem ursprünglichen Strahlengang, beispielsweise durch Wassertropfen, entstehen.

Die durch den Empfänger detektierte abgeschwächte Strahlung wird als Sensorsignal an eine signalverarbeitende Anordnung ausgegeben und dort beispielsweise im Hinblick auf die Ansteuerung einer Scheibenwisch- oder Waschanlage für Kraftfahrzeuge ausgewertet. Eine Steuerung steuert in Abhängigkeit des ausgewerteten Sensorsignals den Wischermotor in einem Dauer- oder Intervallwischbetrieb an.

Die Sender sind gemäß der DE 197 01 258 A1 konzentrisch auf dem Koppelmittel um den Empfänger oder abschnittsweise konzentrisch angeordnet, wobei das Koppelmittel kreis- oder ringförmig ausgestaltet ist. Durch Sender, Empfänger und Koppelmittel wird somit eine kreisförmige Grundfläche aufgespannt. Aufgrund dessen ist der Sensor bzw. das Sensorgehäuse kreiszylinderförmig ausgestaltet.

Die sensitive Fläche des Sensors ist durch die Summe der Meßbereiche der Scheibe gegeben, die sich annähernd zwischen je einem Sender und dem zugehörigen, d.h. angestrahltem, Empfänger befindet. Dabei ist als Meßbereich der Bereich auf der benetzbaren Seite der Scheibe zu verstehen, in dem die Senderstrahlung unbenetzt totalreflektiert wird und daher die Senderstrahlung aufgrund einer Benetzung der Scheibe mehr oder weniger in dem Meßbereich ausgekoppelbar ist.

Nachteilig ist hierbei die von den Sendern, Empfängern und Koppelmittel definierte kreisförmige Grundfläche und das kreiszylinderförmige Sensorgehäuse, die zu einer relativ großen Ausdehnung des Sensors und seiner Auflagefläche auf der Scheibe führen und daher den Sensor augenfällig und störend für den Fahrer des Kraftfahrzeugs machen, wenn dieser, wie heute üblich, innerhalb des Wischbereichs auf der Windschutzscheibe angebracht ist.

Weiterhin nachteilig ist hierbei der geringe Anteil der sensitiven Fläche zu der Grundfläche des Sensors bzw. seiner Auflagefläche. Dies ist darauf zurückzuführen, daß bei einer vorgegebenen Anzahl von Sendern, beispielsweise acht, die nicht sensitiven Bereiche zwischen den am äußeren Umfang der Grundfläche angeordneten Sendern groß sind, üblicherweise sehr viel größer als die sensitiven Bereiche.

Um den sensitiven Bereich zu vergrößern, könnte eine größere Anzahl von Sendern verwendet werden. Dabei muß jedoch eine Verteuerung des Sensors in Kauf genommen werden, ohne daß die Nachteile der großen Ausdehnung bzw. Auflagefläche des Sensors behoben werden können.

Weiterhin ist auch aus der nicht vorveröffentlichten EP-A-1 053 558 (WO-A-99/21206) eine Sensoreinrichtung nach dem Oberbegriff des Anspruchs 1 bekannt, wobei diese Druckschrift unter Artikel 54(3) EPÜ fällt und für die Frage der erfinderischen Tätigkeit nicht von Bedeutung ist.

### Vorteile der Erfindung

Die erfindungsgemäße Sensoreinrichtung mit den kennzeichnenden Merkmalen des Hauptanspruchs hat den Vorteil, daß die Abbildungen der Sender und Empfänger als optische Elemente durch Projektion auf eine zur Scheibe parallelen Ebene Eckpunkte eines Parallelogramms oder eines gleichschenkeligen Dreiecks bilden. Durch diese Anordnung der optischen Elemente erhöht sich das Verhältnis der sensitiven Fläche zu der Grundfläche.

Durch die reduzierte Grundfläche verringern sich ebenfalls die äußeren Abmessungen des Sensors auf der Scheibe und damit dessen Auflagefläche. Besonders vorteilhaft ist, daß durch die trapezförmige Grundfläche die äußeren Abmessungen des Sensorgehäuses rechteckig gewählt werden, so daß die Grundfläche unter optimaler Ausnutzung der Auflagefläche in diese angeordnet werden kann. Eine rechteckige Auflagefläche bzw. Gehäuse wirkt sich darüber hinaus kostenreduzierend bei der Fertigung aus.

Durch die in den Unteransprüchen aufgeführten Maßnahmen ergeben sich vorteilhafte Weiterbildungen und Verbesserungen der im Hauptanspruch angegebenen Merkmale.

Besonder vorteilhaft ist die Anordnung der Sender und Empfänger als Parallelogramm derart, daß jeweils zwei Sender oder zwei Empfänger auf den sich gegenüberliegenden Eckpunkten angeordnet sind. Unter Verwendung von Sendern, deren Senderlicht in zwei Richtungen gebündelt und abgelenkt wird, werden somit vier Meßstrecken, d.h. sensitive Flächen, des Sensors mit lediglich je zwei Sendern und Empfängern realisiert. Die Genauigkeit des Sensors bei der Erfassung einer Benetzung der Scheibe ist dadurch erheblich verbessert. Im Vergleich zu bekannten Sendern, die lediglich auf einen Empfänger abstrahlen, hat sich die sensitive Fläche verdoppelt.

Vorteilhaft ist weiterhin, daß die Abstände der Sender und Empfänger zueinander und damit die Seiten des Parallelogramms gleich sind. Damit wird das Parallelogramm in eine Raute überführt. Insbesondere sind die Abstände gegeben durch die Vorgabe von lediglich nur noch einer Totalreflexion der Senderstrahlung in der Scheibe bevor die Strahlung von einem Empfänger detektiert wird. Die Abstände sind folglich minimal und damit sind die Seiten der Grundfläche ebenfalls minimal.

Vorteilhaft ist ebenfalls, daß die Winkel zwischen den Seiten der Grundfläche variierbar sind und somit die Grundfläche an die äußeren Abmessungen des Sensors und umgekehrt angepaßt werden kann. Läßt sich aufgrund von Vorgaben des Fahrzeugherstellers oder der Gegebenheiten eines Kraftfahrzeugs lediglich beispielsweise ein schmaler Regensensor verwenden, so können ohne großen Aufwand die spitzen Winkel entsprechend kleiner gewählt werden, bis die Ausdehnungen der Grundfläche in die äußeren Abmessungen des Sensorgehäuses optimal integriert werden können.

Besonders vorteilhaft ist demzufolge, daß die Sender und Empfänger innerhalb der Auflagefläche der Sensoreinrichtung angeordnet sind, wobei die Grundfläche optimal in die Auflagefläche integriert und gleichzeitig das Verhältnis der sensitiven Fläche zur Grundfläche erhöht wird. Damit wird ein kostengünstiger Sensor mit kleinen äußeren Abmessungen erhalten.

### Zeichnung

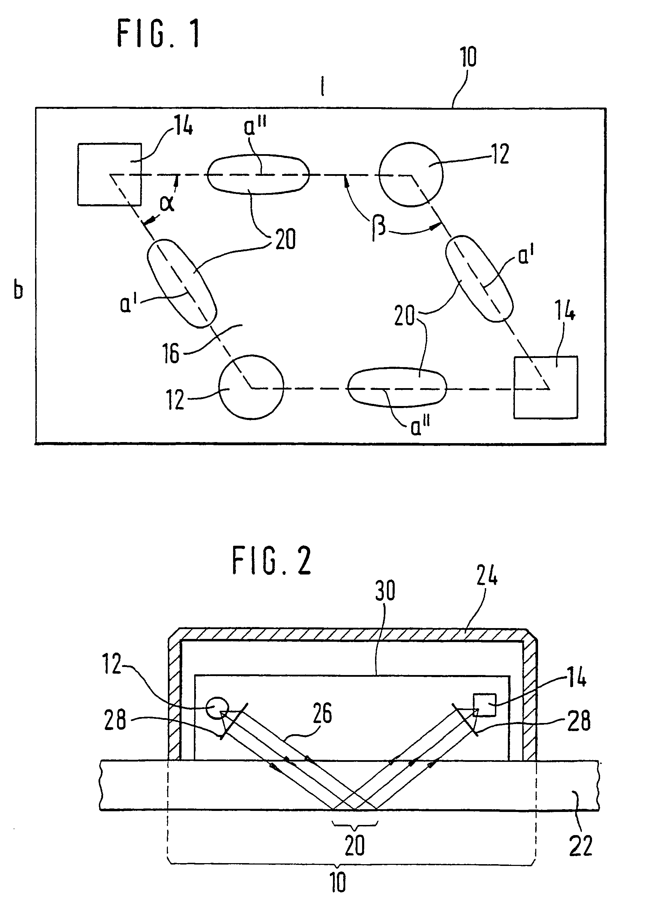

Ausführungsbeispiele der Erfindung sind in der Zeichnung dargestellt und in der nachfolgenden Beschreibung näher erläutert. Es zeigt Figur 1 ein erstes Ausführungsbeispiel, Figur 2 einen Schnitt durch eine Sensoreinrichtung.

### Beschreibung des Ausführungsbeispiels

Figur 1 und 2 zeigen eine rechteckige Auflagefläche 10 der Breite b und der Länge 1 einer Sensoreinrichtung mit einem Sensorgehäuse 24 auf einer Scheibe 22. Deren Auflagefläche 10 ist beispielsweise durch den Kontakt des Sensors mit der Scheibe 22 gegeben. Allgemein entsprechen die äußeren Abmessungen der Auflagefläche 10 den äußeren Abmessungen der Sensoreinrichtung. Jedoch ist beispielsweise die Auflagefläche 10 ebenfalls eine Projektion der äußeren Abmessungen des Sensorgehäuses 24 bei Aufsicht auf die Scheibe 22. Alternativ kann daher das Sensorgehäuse 24 auch bauchig über die kontaktierte Fläche der Scheibe 22 überstehen und darin optische Elemente des Sensors aufnehmen.

Die Sensoreinrichtung ist beispielsweise in dem Wischbereich eines Scheibenwischers auf der Innenseite einer Kraftfahrzeug-Frontscheibe 22 befestigt oder in einem Spiegelfuß eines Kfz-Rückspiegels integriert. Nicht dargestellt ist die Befestigung des Sensorgehäuses 24 oder eines Lichtleitkörpers mit der Scheibe 22.

Vorzugsweise ist der Lichtleitkörper oder das Gehäuse 24 durch Klebung auf der Scheibe 22 befestigt, wobei ersterer die Funktion innehat, das von einem Sender 12 abgestrahlte Licht 26 in die Scheibe 22 einzukoppeln und das in der Scheibe 22 durch Totalreflexion oder Reflexion geleitete Licht 26 an einer anderen vorbestimmten Stelle auf einen Empfänger 14 auszukoppeln. Dies geschieht mitunter an Linsen 28, brechenden Flächen oder Spiegeln, die am Lichtleitkörper angeformt sind und die die Strahlen 26 in die gewünschte Richtung bündeln, ab- oder umlenken.

Oberhalb der Auflagefläche 10 bzw. des Lichtleitkörpers sind zwei lichtausstrahlende Sender 12 und zwei lichtdetektierende Empfänger 14 an einer, an sich bekannten, Haltevorrichtung innerhalb des Sensorgehäuses 24 befestigt. Oftmals bietet sich eine die Elektronik oder eine Sensoransteuerung tragende Leiterplatte 30 als Haltvorrichtung zur Befestigung der Sender 12 und Empfänger 14 an. Als Sender 12 sind vorzugsweise Licht-Emittierende-Dioden (LED), als Empfänger 14 Licht-Detektierende-Dioden (LRD) zu verwenden, wobei vorzugsweise die Senderstrahlung 26 im infraroten Bereich (IR) oder im visuellen Bereich (VIS) liegt.

Die Sender 12 und Empfänger 14 spannen eine gestrichelt angedeutete Grundfläche 16 auf, die erfindungsgemäß einem Parallelogramm oder einem Doppeldreieck mit den Seiten a' und a'' entspricht. Vorzugsweise sind jeweils zwei Seiten a', a'' der Grundfläche 16 gleich lang beziehungsweise, wegen der Toleranzen in den Abmessungen sowie in der Montage der Sender 12 und Empfänger 14, näherungsweise gleich lang.

Die Abstände a' bzw. a' ' zwischen den Sendern 12 und den Empfängern 14 bzw. die Seiten der Grundfläche 16 sind u.a. durch die Wellenlänge der emittierten Strahlung des Senders 12, die Dicke der Scheibe 22 und des Lichtleitkörpers, dem Brechungsindex der Scheibe 22 als auch dem Eintrittswinkel und der Eintrittsstelle der Strahlung 26 in die Scheibe 22 derart gegeben, daß die in die Scheibe 22 eingekoppelte Strahlung 26 lediglich einmal an der Oberfläche der Scheibe 22, vorzugsweise der Außenseite der Kraftfahrzeug-Frontscheibe, totalreflektiert und anschließend aus der Scheibe 22 zu dem Empfänger 14 geleitet wird.

Bei mehr als einer gewünschten Totalreflexion an der benetzbaren Außenseite der Scheibe 22 ist der Abstand a' bzw. a' ' der Sender 12 und Empfänger 14 entsprechend größer zu wählen. Ferner ist der Abstand a' bzw. a' ' von einem nicht zusammengehörigen Sender 12 und Empfänger 14, d.h. der Sender 12 strahlt nicht auf diesen Empfänger 14 ab, beliebig zu wählen.

Die skizzierten sensitiven Flächen 20 entsprechen den Bereichen auf der benetzbaren Seite der Scheibe 22, an denen die Totalreflexion der Strahlung 26 bei unbenetzer Scheibe 22 erfolgt. Je nach Anordnung der Sender 12 und Empfänger 14 zur Scheibe 22, der Dicke der Scheibe 22 und dem Durchmesser des Senderstrahls 26 sind die sensitiven Bereiche 20 mehr oder weniger ausgedehnt.

Gemäß Figur 1 entspricht der Abstand a' ' beispielsweise einer Totalreflexion in der Scheibe 22 des von dem Sender 12 auf den Empfänger 14 abgestrahlten Lichts 26. Der Abstand a' und somit der Abstand zwischen unabhängigen Sendern 12 und Empfängern 14 ist beliebig wählbar. Durch die Wahl des Abstandes a' und des Winkels α werden daher wesentlich die Maße des Parallelogramms und damit der Grundfläche 16 und der Auflagefläche 10 bestimmt.

Die Winkel α und β zwischen jeweils zwei Seiten des Parallelogramms sind frei festzulegen, wobei hier per definitionem der Winkel α jeweils den kleineren bzw. spitzen Winkel des Parallelogramms bezeichnet. Dem Winkel α ist ein Winkelbereich von nahezu Null bis neunzig Grad zugeordnet.

Kriterien für die Wahl eines Winkels sind beispielsweise die äußeren Abmessungen des Sensors, insbesondere das Verhältnis von Länge 1 und Breite b seiner Auflagefläche 10, sowie die Abmessungen der sensitiven Bereiche 20 zwischen den Sendern 12 und Empfängern 14, so daß keine unerwünschte Überlappung der sensitiven Bereiche 20 und damit eine Einschränkung der Empfindlichkeit des Sensors auftritt. Weiterhin sind der Strahldurchmesser und die Maße der Sensoren 12 und Empfänger 14 zu berücksichtigen. Darüberhinaus geht der Abstand a'' zwischen Sender 12 und Empfänger 14 und somit die Anzahl der in der Scheibe 22 realisierten Totalreflexionen ein.

Beispielsweise wird bei einer schmalen und langen, d.h. rechteckigen, Auflagefläche 10 des Sensors der Winkel α eher klein gewählt, beispielsweise α = 45°. Andererseits können die Winkel α,β rechte Winkel bilden, so daß sich ein quadratischer oder rechteckiger Aufbau des Sensors ergibt. Vorzugsweise ist ein Winkelbereich von 65° bis 70° zu realisieren.

In einer verbesserten Ausgestaltung des Ausführungsbeispiels werden durch je zwei Sender 12 und Empfänger 14 vier Meßstrecken realisiert, indem die von den Sendern 12 ausgestrahlte Strahlung 26 in zwei Richtungen mittels Linsen 28 oder dergleichen gebündelt und auf zwei Empfänger 14 abgelenkt wird. Dafür sind folglich alle Abstände a', a' ' derart zu wählen, daß sich eine vorgegebene Anzahl von Totalreflexionen in der Scheibe 22 ergeben. Vorzugsweise sind die Abstände a', a' ' gleich lang. Die Grundfläche 16 ist somit eine Raute bzw. ein Doppeldreieck aus zwei gleichschenkeligen Dreiecken. Die vier Meßstrecken verdoppeln die sensitiven Bereiche 20 des Sensors und verbessern somit die Empfindlichkeit der Regenerfassung bei gleichbleibendem Aufbau.

## Patentansprüche

1. Sensoreinrichtung zur Erfassung einer Benetzung, insbesondere Niederschlag und Verschmutzung, auf einer Scheibe (22) mit mindestens einem Sender (12) und mindestens einem Empfänger (14) für das von den Sendern (12) abgestrahlte Licht, wobei mehrere Sender (12) und/oder Empfänger (14) vier optische Elemente der Sensoreinrichtung bilden und die Abbildungen der optischen Elemente (12, 14) durch Projektion auf einer zur Scheibe (22) parallelen Ebene Eckpunkte eines Parallelogramms (16) bilden, **dadurch gekennzeichnet, dass** die Winkel α und β jeweils zwei Seiten des Parallelogramms (16) einschließen und derart festgelegt sind, dass der Winkel α kleiner ist als der Winkel β.

2. Sensoreinrichtung nach Anspruch 1, **dadurch gekennzeichnet, dass** mindestens ein Sender (12) Strahlung in zwei Richtungen auf zwei Empfänger (14) ausstrahlt.

3. Sensoreinrichtung nach einem der vorhergehenden Ansprüche, **dadurch gekennzeichnet, dass** die Anzahl der Sender (12) und Empfänger (14) jeweils zwei beträgt.

4. Sensoreinrichtung nach einem der vorhergehenden Ansprüche, **dadurch gekennzeichnet, dass** die Sender (12) bzw. Empfänger (14) auf den jeweils gegenüberliegenden Eckpunkten des Parallelogramms (16) angeordnet sind.

5. Sensoreinrichtung nach Anspruch 1 oder 4, **dadurch gekennzeichnet, daß** das Parallelogramm (16) als Raute mit gleich großen Abständen (a', a") zwischen den Sendern (12) und den Empfängern (14) ausgebildet ist.

6. Sensoreinrichtung nach Anspruch 1, **dadurch gekennzeichnet, dass** der spitze Winkel (α) des Parallelogramms (16) Werte zwischen nahezu Null und neunzig Grad annimmt.

7. Sensoreinrichtung nach einem der vorhergehenden Ansprüche, **dadurch gekennzeichnet, dass** die Projektion eines Gehäuses (24) der Sensoreinrichtung eine viereckige, insbesondere rechteckige, Auflagefläche (10) auf der Scheibe (22) ergibt, innerhalb derer die Sender (12) und die Empfänger (14) unter im wesentlichen maximaler Ausnutzung der zur Verfügung stehenden Auflagefläche (10) angeordnet sind.

8. Sensoreinrichtung nach einem der vorhergehenden Ansprüche, **dadurch gekennzeichnet, dass** der Abstand (a', a") zwischen Sender (12) und einem der das Senderlicht (26) erfassenden Empfänger (14) derart bestimmt ist, dass lediglich eine Totalreflexion des Sendelichts (26) in der Scheibe (22) auftritt.

## Claims

1. Sensor device for detecting wetting, in particular precipitation and soiling, on a window pane (22), having at least one transmitter (12) and at least one receiver (14) for the light emitted by the respective transmitters (12), a number of transmitters (12) and/or receivers (14) forming four optical elements of the sensor device and the images of the optical elements (12, 14) forming corner points of a parallelogram (16) by projection onto a plane parallel to the window pane (22), **characterized in that** the angles α and β in each case enclose two sides of the parallelogram (16) and are fixed such that the angle α is smaller than the angle β.

2. Sensor device according to Claim 1, **characterized in that** at least one transmitter (12) emits radiation in two directions onto two receivers (14).

3. Sensor device according to one of the preceding claims, **characterized in that** the number of the transmitters (12) and receivers (14) is in each case two.

4. Sensor device according to one of the preceding claims, **characterized in that** the transmitters (12) and/or receivers (14) are arranged at the respectively opposite corner points of the parallelogram (16).

5. Sensor device according to Claim 1 or 4, **characterized in that** the parallelogram (16) is designed as a lozenge with equally large distances (a', a' ') between the transmitters (12) and the receivers (14).

6. Sensor device according to Claim 1, **characterized in that** the acute angle (α) of the parallelogram (16) assumes values between virtually zero and ninety degrees.

7. Sensor device according to one of the preceding claims, **characterized in that** the projection of a housing (24) of the sensor device produces on the window pane (22) a quadrangular, in particular a rectangular, bearing surface (10) within which the transmitters (12) and the receivers (14) are arranged in a fashion utilizing substantially the maximum amount of available bearing surface (10).

8. Sensor device according to one of the preceding claims, **characterized in that** the distance (a', a' ') between a transmitter (12) and one of the receivers (14) detecting the transmitter light (26) is defined in such a way that only total reflection of the transmitted light (26) occurs in the window pane (22).

## Revendications

1. Installation de détecteur d'humidité, notamment de pluie et de saleté sur une vitre (22) comportant au moins un émetteur (12) et au moins un récepteur (14) pour recevoir la lumière émise par les émetteurs (12), plusieurs émetteurs (12) et/ou récepteurs (14) constituant quatre éléments optiques de l'installation de détection et les images des éléments optiques (12, 14) par projection sur un plan parallèle à la vitre (22) forment les sommets d'un parallélogramme (16),
**caractérisée en ce que**
les angles (α) et (β) sont compris entre chaque fois deux côtés du parallélogramme (16) et sont fixés pour que l'angle (α) soit inférieur à l'angle (β).

2. Installation de détecteur selon la revendication 1,
**caractérisée en ce qu'**
au moins un émetteur (12) émet dans deux directions vers deux récepteurs (14).

3. Installation de détecteur selon l'une des revendications précédentes,
**caractérisée par**
chaque fois deux émetteurs (12) et deux récepteurs (14).

4. Installation de détecteur selon l'une des revendications précédentes,
**caractérisée en ce que**
les émetteurs (12) ou récepteurs (14) sont prévus aux sommets opposés du parallélogramme (16).

5. Installation de détecteur selon la revendication 1 ou 4,
**caractérisée en ce que**
le parallélogramme (16) est un losange avec les mêmes distances (a', a'') entre les émetteurs (12) et les récepteurs (14).

6. Installation de détecteur selon la revendication 1,
**caractérisée en ce que**
l'angle aigu (α) du parallélogramme (16) prend des valeurs comprises entre pratiquement zéro et quatre vingt dix degrés.

7. Installation de détecteur selon l'une quelconque des revendications précédentes,
**caractérisée en ce que**
la projection d'un boîtier (24) de l'installation de détection donne une surface d'appui (10) quadrangulaire, notamment rectangulaire sur la vitre (22) à l'intérieur de laquelle se trouvent les émetteurs (12) et les récepteurs (14) en utilisant pratiquement au maximum la surface d'appui (10) disponible.

8. Installation de détecteur selon l'une quelconque des revendications précédentes,
**caractérisée en ce que**
la distance (a', a") entre l'émetteur (12) et l'un des récepteurs (14) recevant la lumière (26) de l'émetteur est définie de façon à ne produire qu'une réflexion totale de la lumière d'émission (26) dans la vitre (22).
